(19) Europäisches Patentamt / European Patent Office / Office européen des brevets

(11) **EP 3 986 153 B1**

(12) **EUROPEAN PATENT SPECIFICATION**

(45) Date of publication and mention
of the grant of the patent:
**04.10.2023 Bulletin 2023/40**

(21) Application number: **20734690.9**

(22) Date of filing: **22.06.2020**

(51) International Patent Classification (IPC):
*A23K 20/10* (2016.01)        *A23K 20/111* (2016.01)
*A23K 20/158* (2016.01)

(52) Cooperative Patent Classification (CPC):
**A23K 20/10; A23K 20/111; A23K 20/158;
A23K 50/30**

(86) International application number:
**PCT/EP2020/067289**

(87) International publication number:
**WO 2020/254678 (24.12.2020 Gazette 2020/52)**

(54) **FEED ADDITIVE**

FUTTERZUSATZ

ADDITIF ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2019 EP 19181563**

(43) Date of publication of application:
**27.04.2022 Bulletin 2022/17**

(73) Proprietor: **PerformaNat GmbH
14163 Berlin (DE)**

(72) Inventors:
• **ROSENDAHL, Julia**
  **14163 Berlin (DE)**
• **SCHRAPERS, Katharina**
  **14163 Berlin (DE)**

(74) Representative: **Van den Berg, Frans Richard
De Beemd 46
6903 AG Zevenaar (NL)**

(56) References cited:
WO-A1-2008/155536        WO-A1-2015/160843
US-A1- 2004 009 206        US-A1- 2014 037 582
US-A1- 2016 128 933

**Description**

The present invention pertains to feed additives comprising a TRP modulator.

In US 2015/0164822, TRP modulators are reported to be used in feed additives. Examples of such TRP modulators include menthol and thymol. These TRP modulators serve to alleviate gastrointestinal tract disorders in ruminants, such as rumen acidosis and parturient paresis. The speed of resorption from the rumen of ammonium, calcium, magnesium and protons can be regulated using the TRP modulators.

WO 2017/37157 discloses the use of essential oils, in particular microencapsulated thyme oil (consisting of anethol and thymol), in combination with saponins for improving the feed conversion in poultry. The microencapsulation serves to improve the bioavailability of the thyme oil.

In WO 2015/86758 the use of biotin and at least two essential oils to increase the intramuscular fat deposition and marbling in cows are described. WO 2016/128530 combines bacterial amylase with at least two essential oils selected from thymol, eugenol, meta-cresol, vanillin and guajacol to improve the digestibility of feed in rumen. WO 2008/155536 discloses feed additives comprising cinnamaldehyde and a further essential oil selected from citral, eugenol, limonene, thymol, vanillin and combinations thereof in gum-containing particles. The essential oils serve to reduce the population of pathogenic bacteria.

WO 2015/160843 describes compositions for oral administration comprising an ion channel activator, the ion channel activator may be a wide variety of compounds including essential oils such as capsaicin, cinnamaldehyde and gingerol. These compositions are used in pharmaceutical applications such as in patients with a central nervous system disorder or injury.

Essential oils have been reported for a wide variety of uses. However, none disclose the possibility and effect of essential oils on cation uptake in the intestine of monogastric animals.

It is an object of the invention to provide an improved feed additive.

The invention pertains to a feed additive for monogastric animal feed comprising at least two TRP modulators capable of improving calcium uptake in the intestine of a monogastric animal, and a controlled release agent, wherein the feed additive comprises carvacrol and vanillin. The feed additive of the invention allows for the release of the TRP modulators in the intestine rather than the stomach of the animal. This has the advantage that the TRP modulator can stimulate the resorption of cations. in particular calcium ions. in at least part of the intestine. The TRP modulators are chosen such that a positive influence of the cation uptake in the jejunum. caecum and/or the colon is observed. It was found that the presence of the TRP channels in each part of the intestine does not guarantee a positive stimulation of the calcium ion uptake. Surprisingly, the TRP modulator of the invention were observed to have a more pronounced effect than expected based on the presence of the TRP channels alone. The feed additive of the invention brings about an improved immune system in the monogastric animals, in particular the immunoglobulin (Ig) concentration in the blood plasma may increase. This in turn may render a reduction in the use of antibiotics. The use of the inventive feed additive may further lead to a reduction of the severity of or even prophylaxis of mastitis metritis agalactia (MMA) in swine. The feed additive of the invention may further improve the barrier function of the gut, which in turn may lead to a lower influx of bacteria from the gut into the blood. Also the occurrence of post weaning diarrhea in piglets may be reduced. In poultry, the quality of the egg shell is generally improved. Additionally, the bone density in poultry may be improved and/or the occurrence of osteoporosis reduced. Moreover, the digestibility of the feed and/or nutrient uptake are generally improved. In addition, the daily weight gain and/or the weight of the piglets treated with the feed additive of the invention is higher compared to piglets not treated with the feed additive of the invention. A similar effect on weight gain is observed for chickens.

The invention further pertains to a feed additive for monogastric animal feed comprising at least two TRP modulators capable of improving calcium uptake in the intestine of a monogastric animal, and a controlled release agent, wherein the controlled release agent is selected from hydrogenated animal oils, hydrogenated vegetable oils, fatty acids having at least 14 carbon atoms and pH sensitive polymers. Preferably, the controlled release agent is a hydrogenated animal oil or hydrogenated vegetable oil. This feed additive may have similar advantages as described above.

in one embodiment, the at least two TRP modulators used in the feed additives of the invention have an overall net flux of calcium ions in the jejunum, caecum and colon that is higher than the net flux measured using the control. The conditions for determining the net flux are set out in Example 1 (using an Ussing-chamber). The overall net flux can be calculated by addition of the weighted net flux for each essential oil, i.e. multiplying the net flux of the essential oil with the fraction of the essential oil in the total essential oil mixture. For example, the weighted net flux of a 1:1 (w/w) mixture of carvacrol and vanillin in the jejunum is calculated as follows: 0.5*134.5 (for carvacrol) + 0.5*142.9 (for vanillin) which amounts to an overall net flux in the jejunum of 138.7% for the mixture. The same calculation for the caecum amounts to 140.1% (calculated: 0.5*180.4 (for carvacrol) + 0.5*99.7 (for vanillin)). In a four-way mixture of carvacrol, vanillin, cinnamaldehyde and linalool (4:2:2:2 w/w/w/w) this leads to an overall net flux in the caecum of 129.0% (calculated: 0.4*180.4 (for carvacrol) + 0.2*99.7 (for vanillin) + 0.2*95.2 (for cinnamaldehyde) + 0.2*92.1 (for linalool)). As the net flux for the control is set to 100%, an overall net flux above 100% is considered an improvement in calcium uptake.

The feed additive of the invention comprises a TRP modulator. The term "TRP modulator" refers to compounds that can influence the activity of the transient receptor potential (TRP) channels. Compound that are capable of increasing the activity of the TRP channels are referred to as TRP agonists. TRP antagonists are capable of decreasing the activity of the TRP channels. The TRP modulator can influence one or more specific TRP channels. For instance, the TRP modulator may activate or increase the activity of two or more TRP channels. The TRP modulator may further inhibit or decrease the activity of two or more TRP channels. The TRP modulator may activate one or more TRP channels and may inhibit another TRP channel. Examples of such TRP channels include TRPV (vanilloid receptor) such as TRPV1, TRPV2, TRPV3, TRPV4, TRPV5 and TRPV6; TRPM (melastatin) such as TRPM3, TRPM5, TRPM6, TRPM7 and TRPM8; TRPC (classic) such as TRPC1, TRPC3 and TRPC6; TRPA (ankyrin) such as TRPA1; TRPP (polycystin) such as TRPP1, TRPP2 and TRPP3; and TRPML (mucolipin) such as TRPML1, TRPML2 and TRPML3. Especially interesting for the feed additive of the invention are the TRP channels present in the intestine of monogastric animals. Specific TRP channels observed in the intestine of monogastric animals include TRPA1, TRPV3, TRPV6, TRPM6 and TRPM7. Preferably, the TRP modulator is a TRP modulator capable of stimulating at least one TRP channel selected from the group consisting of TRPA1, TRPV3, TRPV6, TRPM6 and TRPM7. More preferably, the TRP modulator is a TRP modulator capable of stimulating at least one TRP channel selected from the group consisting of TRPA1 and TRPV3.

The TRP modulator may be any TRP modulator capable of improving calcium uptake in the intestine of a monogastric animal. Examples of such TRP modulators include borneol, carvacrol, citral, eugenol, linalool, menthol, methyl salicylate, oleocanthal, thymol, vanillin and cinnamaldehyde. In one embodiment, the TRP modulator is selected from the group consisting of borneol, carvacrol, citral, linalool, thymol, vanillin and cinnamaldehyde. In another embodiment, the TRP modulator is selected from the group consisting of carvacrol, citral, linalool, vanillin and cinnamaldehyde. In a preferred embodiment, the TRP modulator is selected from the group consisting of cinnamaldehyde, carvacrol, vanillin and linalool.

In one embodiment, the TRP modulator is a TRP modulator capable of improving calcium uptake in the caecum of a monogastric animal. Preferably, the TRP modulator is carvacrol.

In an embodiment of the feed additive of the invention, the at least two TRP modulators are carvacrol and vanillin. In one embodiment, the feed additive may further comprise a third TRP modulator. Preferably, the third TRP modulator is capable of improving calcium uptake in the colon of a monogastric animal. The third TRP modulator may be selected from a group consisting of borneol, citral, linalool, thymol and cinnamaldehyde. Preferably, the third TRP modulator is selected from citral, linalool and cinnamaldehyde. Most preferably, the third TRP modulator is cinnamaldehyde.

In one embodiment, the feed additive of the invention may comprise the TRP modulator in an amount of at least 0.2 percent by weight (wt%), preferably at least 0.5 wt%, more preferably at least 1 wt%, even more preferably at least 2 wt%, even more preferably at least 5 wt%, even more preferably at least 7 wt%, and most preferably at least 10 wt%, and preferably at most 90 wt%, more preferably at most 80 wt%, even more preferably at most 70 wt%, even more preferably at most 60 wt%, and most preferably at most 50 wt%, based on the total weight of the feed additive.

in one embodiment, the feed additive may further comprise a third TRP modulator. Preferably, the third TRP modulator is capable of improving calcium uptake in the colon of a monogastric animal. The third TRP modulators may be selected from a group consisting of borneol, citral, linalool, thymol and cinnamaldehyde. Preferably, the third TRP modulator is selected from citral, linalool and cinnamaldehyde. Most preferably, the third TRP modulator is cinnamaldehyde.

In one embodiment, the feed additive of the invention may comprise the third TRP modulator in an amount of at least 0.2 percent by weight (wt%), preferably at least 0.5 wt%, more preferably at least 1 wt%, even more preferably at least 2 wt%, even more preferably at least 5 wt%, even more preferably at least 7 wt%, and most preferably at least 10 wt%, and preferably at most 90 wt%, more preferably at most 80 wt%, even more preferably at most 70 wt%, even more preferably at most 60 wt%, and most preferably at most 50 wt%, based on the total weight of the feed additive.

In a further embodiment, the feed additive may comprise a fourth TRP modulator. Preferably, the fourth TRP modulator is capable of improving calcium uptake in the jejunum of a monogastric animal. Preferably, the fourth TRP modulator is selected from linalool and thymol. Most preferably, the fourth TRP modulator is linalool.

In one embodiment, the feed additive of the invention may comprise the fourth TRP modulator in an amount of at least 0.2 percent by weight (wt%), preferably at least 0.5 wt%, more preferably at least 1 wt%, even more preferably at least 2 wt%, even more preferably at least 5 wt%, even more preferably at least 7 wt%, and most preferably at least 10 wt%, and preferably at most 90 wt%, more preferably at most 80 wt%, even more preferably at most 70 wt%, even more preferably at most 60 wt%, and most preferably at most 50 wt%, based on the total weight of the feed additive.

The invention further pertains to a feed additive comprising a controlled release agent, carvacrol, vanillin, and cinnamaldehyde. Preferably, the feed additive comprises a controlled release agent, carvacrol, vanillin, and cinnamaldehyde, wherein the feed additive comprises 15 to 35 wt% vanillin, 15 to 35 wt% cinnamaldehyde and 30 to 50 wt% carvacrol, based on the total weight of TRP modulators. The invention further pertains to a feed additive comprising a controlled release agent, carvacrol, vanillin, and linalool. Preferably, the feed additive comprises a controlled release agent, carvacrol, vanillin, and linalool, wherein the feed additive comprises 15 to 35 wt% vanillin, 15 to 35 wt% linalool and 30 to 50 wt% carvacrol, based on the total weight of TRP modulators. The invention further pertains to a feed additive comprising a controlled release agent, carvacrol, vanillin, cinnamaldehyde and linalool. Preferably, the feed additive comprises a controlled release agent, carvacrol, vanillin, cinnamaldehyde and linalool, wherein the feed additive comprises 15 to 35 wt% vanillin, 15 to 35 wt% cinnamaldehyde, 15 to 35 wt% linalool and 30 to 50 wt% carvacrol, based on the total weight of TRP modulators.

In one embodiment, the feed additive of the invention may comprise the total of TRP modulators, thus including the third TRP modulator and fourth TRP modulator, in an amount of at least 1 percent by weight (wt%), preferably at least 2 wt%, more preferably at least 5 wt%, even more preferably at least 7 wt%, and most preferably at least 10 wt%, and preferably at most 90 wt%, more preferably at most 80 wt%, even more preferably at most 70 wt%, even more preferably at most 60 wt%, and most preferably at most 50 wt%, based on the total weight of the feed additive.

In one embodiment, the weight ratio between carvacrol and vanillin is at most 10, preferably at most 5 and most preferably at most 2, and generally at least 0.1, preferably at least 0.2 and most preferably at least 0.5.

In one embodiment, the weight ratio between the at least two TRP modulators, preferably carvacrol and vanillin, and the third TRP modulator is at most 10, preferably at most 5 and most preferably at most 2, and generally at least 0.1, preferably at least 0.2 and most preferably at least 0.5.

in one embodiment, the weight ratio between the at least two TRP modulator, preferably carvacrol and vanillin, and the fourth TRP modulator is at most 10, preferably at most 5 and most preferably at most 2, and generally at least 0.1, preferably at least 0.2 and most preferably at least 0.5.

The feed additive of the invention comprises a controlled release agent. The controlled release agent can be any controlled release agent known in the art, and capable of releasing the TRP modulator in the intestine of the monogastric animal. The controlled release agent should be able to withstand the conditions in the stomach of the monogastric animal. Preferably, the controlled release agent is stable at a pH below 5. In the context of this application, the term "stable at a pH below 5" means that the controlled release agent does not or very slowly dissolve and/or disintegrate at a pH below 5 so that the TRP modulator is not released in the stomach, or at most 20 wt% of the TRP modulator is released in the stomach. In one embodiment, the TRP modulator is dissolved in and/or encapsulated by the controlled release agent. Also morphologies comprising a core-shell with the controlled release agent in the shell or multiple layers of controlled release agents are contemplated. The feed additive of the invention can be prepared using methods known in the art.

In one embodiment of the invention, the controlled release agent is selected from a group consisting of hydrogenated animal oils, hydrogenated vegetable oils, fatty acids having at least 14 carbon atoms and pH sensitive polymers. Examples of hydrogenated animal oils include hydrogenated beef tallow, beef lard, hydrogenated fish oil and hydrogenated mutton tallow. Examples of hydrogenated vegetable oils include hydrogenated palm oil, hydrogenated soybean oil, hydrogenated rapeseed oil, hydrogenated cotton seed oil and hydrogenated castor oil. The wording "hydrogenated" refers to the hydrogenation of unsaturated bonds in the oils so that the oils become solidified (i.e. hardened). The hydrogenation can be complete or partial. Examples of fatty acids having at least 14 carbon atoms include stearic acid, palmitic acid, oleic acid, olenic acid and behenic acid. The pH sensitive polymers are generally stable at a pH below 5 and dissolve and/or disintegrate in the intestine of the monogastric animal. Examples of pH sensitive polymers include synthetic polymers such as polyethylene, polyethylene wax and copoly(2-vinyl pyridine-styrene); and natural polymers such as waxes like bees wax and paraffin wax; and cellulose derivatives like cellulose propionate morpholinobutyrate (CPMB), cellulose isobutyrate morpholinobutyrate (CIBMB), cellulose acetobutyrate and ethyl cellulose. Further examples and embodiments can be found in US 4,808,412, US 4,832,967 and US 4,876,097. The combination of two or more encapsulating agents is also contemplated. The controlled release agent may further be combined with additives commonly used in controlled release applications, such as fillers including silica and calcium carbonate. Preferably, the controlled release agent is hydrogenated vegetable oil. In one embodiment, the controlled release is a hydrogenated vegetable oil selected from the group consisting of hydrogenated palm oil, hydrogenated soybean oil, hydrogenated rapeseed oil, hydrogenated cotton seed oil and hydrogenated castor oil. Most preferred is hydrogenated rapeseed oil. Natural gums and their derivatives like the ones described in WO 2008/155536 are less preferred as natural gums are relatively expensive, not always readily available, not uniform throughout different batches and may be contaminated with microbes such as bacteria.

In one embodiment, the feed additive of the invention may comprise the controlled release agent in an amount of at least 10 percent by weight (wt%), preferably at least 20 wt%, more preferably at least 30 wt%, even more preferably at least 40 wt%, and most preferably at least 50 wt%, and preferably at most 99 wt%, more preferably at most 95 wt%, even more preferably at most 90 wt%, even more preferably at most 85 wt%, and most preferably at most 80 wt%, based on the total weight of the feed additive.

The feed additive may further comprise other ingredients commonly used in feed additives. Such other ingredients include vitamins and trace minerals.

The remaining part of the feed additive may be comprised of other components commonly used in such feed additives. With the TRP modulators and controlled release agent, the other components add up to 100 wt% of the total weight of the feed additive.

The feed additive of the invention can be applied to a premix of animal feed or animal feed. Consequently, the invention further pertains to animal feed comprising the feed additive of the invention.

In yet another aspect, the amount of feed additive is at least 0.001 wt%, preferably at least 0.01 wt%, more preferably at least 0.02 wt% and most preferably at least 0.05 wt%, and at most 10 wt%, preferably at most 8 wt%, more preferably at most 5 wt%, and most preferably at most 3 wt%, based on the total weight of the animal feed.

In a first embodiment of the animal feed according to the invention, the feed additive is present in the animal feed in an amount of at least 0.001 kg per ton of total daily intake, preferably at least 0.01 kg, more preferably at least 0.02 kg per ton, and at most 10 kg per ton of total daily intake of feed, preferably at most 5 kg per ton, more preferably at most 2 kg per ton, and most preferably at most 1 kg per ton of total daily intake. In the context of this application, the "total daily intake of feed" is the complete mass of feed an animal takes per day, excluding drinking water and added water to the animal feed.

The invention further pertains to a premix of animal feed comprising a feed additive comprising comprising at least two TRP modulator capable of improving calcium uptake in the intestine of a monogastric animal, and a controlled release agent.

In yet a further aspect, the amount of feed additive is at least 0.01 wt%, preferably at least 0.05 wt%, more preferably at least 0.1 wt%, even more preferably at least 0.5 wt%, even more preferably at least 1 wt%, and most preferably at least 2 wt%, and at most 15 wt%, preferably at most 12 wt%, more preferably at most 10 wt%, and most preferably at most 5 wt%, based on the total weight of the premix of animal feed.

In yet a further aspect, the amount of TRP modulator is at least 0.01 wt%, preferably at least 0.05 wt%, more preferably at least 0.1 wt%, even more preferably at least 0.5 wt%, even more preferably at least 1 wt%, and most preferably at least 2 wt%, and at most 15 wt%, preferably at most 12 wt%, more preferably at most 10 wt%, and most preferably at most 5 wt%, based on the total weight of the premix of animal feed.

Animal feed generally comprises animal nutrients such as fats and/or proteins and/or carbohydrates that is fed to an animal to provide in its metabolic requirements. Animal feed can be a nutritionally complete feed (i.e. providing all required nutrients to support a normal metabolism of the animal). Similar ingredients are also contained in a premix of animal feed, which however contains only part of the required nutrients, and need to be mixed with other nutrients or fed separately from these other nutrients.

The invention further pertains to a composition comprising a calcium source, a feed additive comprising a TRP modulator capable of improving calcium uptake in the intestine of a monogastric animal, and a controlled release agent. The composition may be a paste. Alternatively, the composition can be a powder, a calcium bolus or a drinking solution for monogastric animals such as poultry or swine.

In yet a further aspect, the amount of feed additive is at least 0.1 wt%, preferably at least 0.5 wt%, more preferably at least 1 wt% and most preferably at least 2 wt%, and at most 15 wt%, preferably at most 12 wt%, more preferably at most 10 wt%, and most preferably at most 5 wt%, based on the total weight of the composition.

In yet a further aspect, the amount of TRP modulator is at least 0.1 wt%, preferably at least 0.5 wt%, more preferably at least 1 wt% and most preferably at least 2 wt%, and at most 15 wt%, preferably at most 12 wt%, more preferably at most 10 wt%, and most preferably at most 5 wt%, based on the total weight of the composition.

The invention further pertains to a method of feeding an animal by providing feed to the animal comprising a feed additive comprising a TRP modulator capable of improving calcium uptake in the intestine of a monogastric animal, and a controlled release agent.

The invention further pertains to the use of the feed additive of the invention to improve the immune system in monogastric animals. The invention further pertains to the use of the feed additive of the invention in the alleviation and/or prophylaxis of mastitis metritis agalactia (MMA) in swine.

The invention further pertains to the use of the feed additive of the invention to increase the cation uptake, preferably the $Ca^{2+}$ uptake, in the intestine of a monogastric animal, in particular in the jejunum, caecum and/or colon of a monogastric animal.

In the context of this application, the wording "livestock" refers to animals that are domesticated and raised in an agricultural setting to produce labor and commodities such as meat, eggs, milk, fur, leather and wool. Livestock includes ruminants such as cows, sheep, goats and camels; and monogastrics such as pigs and poultry. The present invention is particularly advantageous for use in monogastric livestock animals such as poultry and swine.

The invention is illustrated with the following examples.

## EXAMPLES

## Example 1

*Material and Methods*

All animals were slaughtered in accordance with German laws for the protection of animals. Removal of intestinal tissue occurred directly after death. was stripped and transported to the laboratory in a warm and gassed transport buffer.

*Measurement of Ca-Transport across epithelium out of the jejunum, caecum and colon of pigs in the Ussing-chamber*

Tissue was mounted in a conventional Ussing-chamber. Chambers contained 16 ml of serosal or mucosal buffer, which was circulated and gassed by a gas lift system (5% $CO_2$/95% $O_2$).

*Groups*

In this experiment 24 chambers were divided into three groups. Group A (jejunum) group B (caecum) and group 3 (colon). Each group (A, B, C) was again divided into four groups (three different TRP-groups (EO) and one control group(control)).

*Procedure*

After ten minutes the chambers were clamped to short circuit mode (Mussler Scientific Instruments, Aachen, Germany). Transepithelial current (Isc) and conductance (Gt) were measured continuously.

After an equilibrating time of around 30 minutes $^{45}Ca^{2+}$ (40kBq per 16 ml chamber) (PerkinElmer Life Sciences, Rodgau-Jügesheim, Germany) was added to either to the mucosal or serosal "hot" side.

At the same time, depending on the group $16\mu l$ ethanol (Control) or $16\mu l$ of a 1M stock solution of the respective essential oil (EO) were added to the mucosal side of the chamber.

The tissue was incubated for 50 min to allow equilibration. At this time the first sample from the "cold" side was taken ($900\mu l$). followed by 4 samples of each $900\mu l$ very 45 minutes. The flux rates were calculated from the rate of appearance of calcium for four flux periods. The sample volume was replaced by an aliquot of the respective buffer. Radioactivity was measured using a $\beta$-counter (LKB Wallace-Perkin-Elmer, Überlingen, Germany).

The concentration of the agonist was elevated by $100\mu M$ directly after the sampling for the second flux period to test concentration effects.

**Table 1** *Chemical composition of the mucosa and serosal buffer solutions used in this Ussing-chamber experiment*

|  | mucosal | serosal |
| --- | --- | --- |
| Chemical | mM | mM |
| $CaCl_2$ | 1.2 | 1.2 |
| $MgCl_2$ | 1.2 | 1.2 |
| MES free acid | 10.0 | 0 |
| Hepes free acid | 0 | 10.0 |
| NaCl | 115.0 | 115.0 |
| $NaH_2PO_4$ | 0.4 | 0.4 |
| $Na_2HPO_4$ | 2.4 | 2.4 |
| KCl | 5.0 | 5.0 |
| $NaHCO_3$ | 25.0 | 25.0 |
| Enrofloxacine | 0.0278 | 0.0278 |
| Mannitol | 5.0 | 0 |
| Glucose | 0 | 5.0 |
| pH | 6.4 | 7.4 |

*Results*

The results obtained are shown in the respective Tables 2, 3 and 4, of the transepithelial calcium flux across the porcine jejunum, caecum and colon depending on the addition of the specific TRP modulator.

**Table 2**: Effects of various essential oils on the flux of calcium of porcine jejunum in nmol·h⁻¹·cm⁻²

| | $J_{m \to s}^{Ca^{2+}}$ | Rel% | $J_{s \to m}^{Ca^{2+}}$ | Rel% | $J_{net}^{Ca^{2+}}$ | Rel% |
|---|---|---|---|---|---|---|
| Control | 49.76 ± 2.85 | 100.0 | 36.81 ± 1.69 | 100.0 | 12.95 ± 3.13 | 100.0 |
| Borneol | 49.69 ± 4.55 | 99.9 | 40.54 ± 2.97 | 110.1 | 9.04 ± 5.41 | 69.8 |
| Carvacrol | 58.24 ± 4.10* | 117.0 | 40.48 ± 2.63 | 110.0 | 17.42 ± 4.80 | 134.5 |
| Citral | 50.24 ± 3.92 | 101.0 | 36.77 ± 2.50 | 99.9 | 12.92 ± 4.57 | 99.8 |
| Eugenol | 56.75 ± 4.62 | 114.1 | 43.58 ± 2.81* | 118.4 | 11.96 ± 5.48 | 92.4 |
| Linalool | 56.36 ± 3.75* | 113.3 | 38.46 ± 2.37 | 104.5 | 17.92 ± 4.34 | 138.4 |
| Menthol | 54.54 ± 3.77 | 109.6 | 37.94 ± 2.38 | 103.1 | 16.57 ± 4.36 | 128.0 |
| Methyl salicylate | 58.08 ± 4.10* | 116.7 | 44.24 ± 2.63* | 120.2 | 13.74 ± 4.80 | 106.1 |
| Oleocanthal | 50.56 ± 4.66 | 101.6 | 43.22 ± 3.03* | 117.4 | 7.97 ± 5.52 | 61.6 |
| Thymol | 59.00 ± 4.55* | 118.6 | 40.84 ± 2.97 | 110.9 | 18.05 t 5.41 | 139.4 |
| Vanillin | 56.92 ± 4.15 | 114.4 | 39.04 ± 2.65 | 106.0 | 18.5 ± 4.85 | 142.9 |
| Cinnamaldehyde | 47.12 ± 4.15 | 94.7 | 35.39 ± 2.65 | 96.1 | 12.34 ± 4.85 | 95.3 |

Statistical difference (p<0.05) to control within one column are marked with "*", tends (p<0.1) are marked with "·".

The absorption of calcium was significantly increased by carvacrol (+8.48 ± 3.62 nmol·h⁻¹·cm⁻². p=0.022). linalool (+ 6.61 ± 3.21 nmol·h⁻¹·cm⁻². p=0.043). methyl salicylate (+8.32 ± 3.62 nmol·h⁻¹·cm⁻². p=0.024) and thymol (+9.24 ± 4.12 nmol·h⁻¹·cm⁻². p=0.028). Furthermore. there was a positive trend for eugenol (p=0.10) and vanillin (p=0.055). Calcium secretion was increased after the application of eugenol, methyl salicylate or oleocanthal. The net transport of calcium was not influenced.

Table 3: Effects of various essential oils on the flux of calcium of porcine caecum in nmol·h⁻¹·cm⁻²

| | $J_{m \to s}^{Ca^{2+}}$ | Rel% | $J_{s \to m}^{Ca^{2+}}$ | Rel% | $J_{net}^{Ca^{2+}}$ | Rel% |
|---|---|---|---|---|---|---|
| Control | 31.68 ± 2.56 | 100.0 | 20.89 ± 1.96 | 100.0 | 10.83 ± 2.46 | 100.0 |
| Borneol | 28.29 ± 5.03 | 89.3 | 23.19 ± 3.93 | 111.0 | 4.37 ± 5.25 | 40.3 |
| Carvacrol | 42.72 ± 4.34* | 134.9 | 24.12 ± 3.40 | 115.5 | 19.55 ± 4.47 | 180.4 |
| Citral | 38.35 ± 4.10 | 121.1 | 30.00 ± 3.20* | 143.6 | 8.89 ± 4.19 | 82.1 |
| Eugenol | 28.25 ± 4.67 | 89.2 | 33.11 ± 3.66* | 158.5 | -3.56 ± 4.82* | -32.8 |
| Linalool | 32.67 ± 3.86 | 103.1 | 22.12 ± 3.02 | 105.9 | 9.98 ± 3.94 | 92.1 |
| Menthol | 35.31 ± 3.87 | 111.5 | 26.15 ± 3.03 | 125.2 | 8.62 ± 3.95 | 79.6 |
| Methyl salicylate | 33.94 ± 4.34 | 107.1 | 24.83 ± 3.40 | 118.9 | 8.43 ± 4.47 | 77.8 |
| Oleocanthal | 49.51 ± 5.08* | 156.3 | 47.19 ± 3.98* | 225.9 | 2.74 ± 5.27 | 25.3 |
| Thymol | 26.65 ± 5.03 | 84.1 | 23.04 ± 3.93 | 110.3 | 2.87 ± 5.25 | 26.5 |
| Vanillin | 35.63 ± 4.37 | 112.5 | 24.91 ± 3.42 | 119.2 | 10.81 ± 4.48 | 99.7 |
| Cinnamaldehyde | 34.78 ± 4.37 | 109.8 | 24.54 ± 3.42 | 117.5 | 10.32 ± 4.48 | 95.2 |

Statistical difference (p<0.05) to control within one column are marked with "*", trends (p<0.1) are marked with "·".

Compared to control conditions. the absorption rate of calcium significantly increased after the addition of carvacrol (+11.04 ± 4.44 nmol·h⁻¹·cm⁻². p=0.015) and oleocanthal (+17.83 ± 5.15 nmol·h⁻¹·cm⁻². p=0.001). Calcium secretion was increased by citral, eugenol and oleocanthal. Menthol tended to increase calcium secretion in caecum (p=0.1).

Net calcium absorption was significantly reduced by eugenol (p=0.007), carvacrol tended to increase net calcium absorption in caecum (p=0.076).

Table 4: Effects of various essential oils on the flux of calcium of porcine colon in $nmol \cdot h^{-1} \cdot cm^{-2}$

|  | $J_{m \to s}^{Ca^{2+}}$ | Rel% | $J_{s \to m}^{Ca^{2+}}$ | Rel% | $J_{net}^{Ca^{2+}}$ | Rel% |
|---|---|---|---|---|---|---|
| Control | $39.02 \pm 2.03$ | 100.0 | $33.41 \pm 2.02$ | 100.0 | $5.61 \pm 2.01$ | 100.0 |
| Borneol | $35.48 \pm 3.85$ | 90.9 | $27.98 \pm 3.71$ | 83.7 | $5.90 \pm 4.50$ | 105.1 |
| Carvacrol | $37.56 \pm 3.36$ | 96.3 | $33.55 \pm 3.26$ | 100.4 | $4.72 \pm 3.80$ | 84.2 |
| Citral | $41.29 \pm 3.18$ | 105.8 | $33.82 \pm 3.09$ | 101.2 | $8.64 \pm 3.56$ | 154.0 |
| Eugenol | $37.80 \pm 3.61$ | 96.9 | $33.24 \pm 3.49$ | 99.5 | $5.16 \pm 4.11$ | 91.9 |
| Linalool | $37.84 \pm 3.00$ | 97.0 | $31.40 \pm 2.92$ | 94.0 | $6.26 \pm 3.35$ | 111.5 |
| Menthol | $40.39 \pm 3.02$ | 103.5 | $40.50 \pm 2.94$* | 121.2 | $0.33 \pm 3.35$ | 5.8 |
| Methyl salicylate | $32.71 \pm 3.36$ | 83.8 | $33.03 \pm 3.26$ | 98.8 | $1.18 \pm 3.8$ | 21.0 |
| Oleocanthal | $50.46 \pm 3.91$* | 129.3 | $45.54 \pm 3.78$* | 136.3 | $4.42 \pm 4.5$ | 78.8 |
| Thymol | $40.29 \pm 3.85$ | 103.2 | $30.25 \pm 3.71$ | 90.5 | $8.43 \pm 4.5$ | 150.2 |
| Vanillin | $37.53 \pm 3.39$ | 96.2 | $27.71 \pm 3.29$ | 82.9 | $8.96 \pm 3.8$ | 159.7 |
| Cinnamaldehyde | $40.07 \pm 3.39$ | 102.7 | $28.12 \pm 3.29$ | 84.2 | $11.09 \pm 3.8$ | 197.8 |

Statistical difference ($p < 0.05$) to control within one column are marked with "*", tends ($p < 0.1$) are marked with "·".

Calcium absorption in colon tended to decrease with methyl salicylate ($p = 0.062$) but increased significantly with oleocanthal. Calcium secretion was increased with oleocanthal and menthol but tended to decrease with vanillin and cinnamaldehyde ($p = 0.079$ and $p = 0.1$). There was no significant effect on net calcium absorption in colon.

The addition of selected TRP modulators leads to an increase of calcium absorption out of the gut, depending on the tissue (colon, caecum or jejunum).

Example 2

Vanillin, linalool and carvacrol were mixed in a respective weight ratio of 3:3:4. The resulting mixture was added to molten hydrogenated rapeseed oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 3

Vanillin, linalool, cinnamaldehyde and carvacrol were mixed in a respective weight ratio of 2:2:2:4. The resulting mixture was added to molten hydrogenated rapeseed oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 4

Vanillin, linalool, cinnamaldehyde and carvacrol were mixed in a respective weight ratio of 2:2:2:4. The resulting mixture was added to molten hydrogenated rapeseed oil in an amount of 5 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 5

Cinnamaldehyde and carvacrol were mixed in a respective weight ratio of 5:5. The resulting mixture was added to molten hydrogenated rapeseed oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 6

Vanillin, linalool, cinnamaldehyde and carvacrol were mixed in a respective weight ratio of 2:2:2:4. The resulting mixture was added to molten hydrogenated soybean oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 7

Vanillin, cinnamaldehyde and carvacrol were mixed in a respective weight ratio of 3:3:4. The resulting mixture was added to molten hydrogenated rapeseed oil in an amount of 10 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 8

Vanillin, linalool, cinnamaldehyde and carvacrol were mixed in a respective weight ratio of 2:2:2:4. The resulting mixture was added to molten hydrogenated rapeseed oil in an amount of 7 wt% of essential oils based on the total weight of the resulting liquid. The liquid was mixed and subsequently sprayed while cooling to room temperature. The solidified droplets were homogeneously coloured and exhibited considerably less odour compared to the essential oils per se.

Example 9

A feeding study was performed with 32 sows and 424 piglets. The sows and piglets were divided in two equal groups of which one group was fed with the feed indicated in Table 5 only (Control) and the other group (Example 9) was fed with the same diet except that the feed additive of Example 8 was added to the diet in an amount of 400 g of feed additive per ton of feed. The diet for the sows was started 28 days before the expected birth date, after which the diet was changed as indicated in Table 5. The diet for the piglets are also indicated in Table 5. The diets were given ad libitum. and the piglets were given every opportunity to get milk from the sows for 25 days until weaning.

**Table 5** *Diet ingredients and chemical feed composition*

|  |  | Sows until birth | Sows after birth | Piglets |
|---|---|---|---|---|
| Energie | MJ ME /kg | 12.2 | 13.0 | 14.4 |
| Protein | % | 13.6 | 16.9 | 17.6 |
| Fat | % | 4.0 | 4.2 | 7.9 |
| Fiber | % | 6.8 | 5.0 | 3.4 |
| Asch | % | 5.1 | 5.4 | 5.0 |
| Lysine | % | 0.70 | 1.00 | 1.43 |
| Methionine | % | 0.21 | 0.28 | 0.55 |
| Calcium | % | 0.69 | 0.82 | 0.65 |
| Phosphorus | % | 0.45 | 0.55 | 0.55 |
| Sodium | % | 0.25 | 0.25 | 0.24 |
| Vitamine A | units / kg | 12000 | 12000 | 16000 |
| Vitamine $D_3$ | units / kg | 1900 | 1950 | 2000 |
| Vitamine E | mg / kg | 80 | 120 | 150 |
| Phytase |  | added | added | added |

From the sows blood was taken at the start of the trial. 1 day after parturition and 7 days after parturition, and the leukocyte concentration was determined. The results are shown in the Table below.

**Table 6** *Leukocyte concentration in sows at different times before and after parturition*

|  | Control | | Example 8 | |  |
|---|---|---|---|---|---|
| Time (d) | Conc. ($10^9$/l) | SEM | Conc. ($10^9$/l) | SEM | p-value |
| -28 (start) | 13.54 | 0.71 | 13.50 | 0.94 | 0.98 |
| +1 | 13.20 | 1.20 | 10.90 | 1.0 | 0.21 |
| +7 | 17.67 | 1.31 | 13.72 | 0.68 | 0.011 |

The results show that the sows fed with the supplemental feed additive according to the invention have a lower leukocyte concentration which is an indication of an improved immune system. Additionally, the concentration of neutrophils (not shown). in particular a lower segmented nucleophile count at day 1 and a higher count at day 7 compared to control together with a higher band cell (that can mature into a segmented nucleophile) count at day 1 and a lower count at day 7 compared to control, further demonstrate that the immune response is faster in sows having the feed additive in their diet, which is consistent with the above leukocyte development and an improved immune system.

The weight of the piglets in the control group (no feed additive) and in the group to which the feed additive of the invention is provided, were measured at birth and after 8 weeks. At birth the average weight of the piglets in the control group is 1.40±0.07 kg, and in the group fed with the feed additive is 1.51±0.06 kg. After eight weeks, the average weight of the piglets in the control group is 18.40±0.34 kg, and in the group fed with the feed additive is 19.92±0.26 kg. This is a significantly improved weight gain of the piglets fed with the feed additive. This is corroborated by the higher average daily gain, i.e. 0.53±0.02 kg/day (control group) versus 0.60±0.01 kg/day.

**Claims**

1.  Feed additive for monogastric animal feed comprising at least two TRP modulators capable of improving calcium uptake in the intestine of a monogastric animal, and a controlled release agent, wherein the feed additive comprises carvacrol and vanillin.

2.  Feed additive according to claim 1 further comprising a third TRP modulator capable of improving calcium uptake in the colon of a monogastric animal.

3.  Feed additive according to claim 2 wherein the third TRP modulator is selected from a group consisting of borneol, citral, linalool, thymol and cinnamaldehyde.

4.  Feed additive according to any one of claims 2 and 3 wherein the third TRP modulator is citral, linalool or cinnamaldehyde.

5.  Feed additive according to any one of the preceding claims further comprising a fourth TRP modulator capable of improving calcium uptake in the jejunum of a monogastric animal.

6.  Feed additive according to claim 5 wherein the fourth TRP modulator is selected from a group consisting of linalool and thymol.

7.  Feed additive according to any one of the preceding claims comprising carvacrol, vanillin and cinnamaldehyde.

8.  Feed additive according to claim 7 further comprising linalool.

9.  Feed additive according to any one of the preceding claims wherein the controlled release agent is selected from hydrogenated animal oils, hydrogenated vegetable oils, fatty acids having at least 14 carbon atoms and pH sensitive polymers.

10. Feed additive for monogastric animal feed comprising at least two TRP modulators capable of improving calcium uptake in the intestine of a monogastric animal, and a controlled release agent, wherein the controlled release agent is selected from hydrogenated animal oils, hydrogenated vegetable oils, fatty acids having at least 14 carbon atoms and pH sensitive polymers.

11. Feed additive according to claim 10 wherein the controlled release agent is a hydrogenated animal oil or a hydrogenated vegetable oil.

12. Animal feed comprising the feed additive of any one of the preceding claims.

13. Use of the feed additive of any one of claims 1 to 11 to improve the immune system in monogastric animals and/or the prophylaxis of mastitis metritis agalactia (MMA) in swine.

14. Use of the feed additive of any one of claims 1 to 11 to increase the cation uptake in the intestine of a monogastric animal, in particular in the jejunum, caecum and/or colon of a monogastric animal.


**Patentansprüche**

1. Futtermittelzusatz für Monogastrierfutter, umfassend mindestens zwei TRP-Modulatoren, die die Calciumaufnahme im Darm eines Monogastriertiers verbessern können, und ein Mittel zur kontrollierten Freisetzung, wobei der Futtermittelzusatz Carvacrol und Vanillin umfasst.

2. Futtermittelzusatz nach Anspruch 1, der außerdem einen dritten TRP-Modulator umfasst, der die Kalziumaufnahme im Dickdarm eines monogastrischen Tieres verbessern kann.

3. Futtermittelzusatz nach Anspruch 2, wobei der dritte TRP-Modulator aus einer Gruppe bestehend aus Borneol, Citral, Linalool, Thymol und Zimtaldehyd ausgewählt ist.

4. Futtermittelzusatz nach einem der Ansprüche 2 und 3, wobei der dritte TRP-Modulator Citral, Linalool oder Zimtaldehyd ist.

5. Futtermittelzusatz nach einem der vorhergehenden Ansprüche, der außerdem einen vierten TRP-Modulator umfasst, der die Kalziumaufnahme im Jejunum eines monogastrischen Tieres verbessern kann.

6. Futtermittelzusatz nach Anspruch 5, wobei der vierte TRP-Modulator aus einer Gruppe ausgewählt ist, die aus Linalool und Thymol besteht.

7. Futtermittelzusatz nach einem der vorhergehenden Ansprüche, umfassend Carvacrol, Vanillin und Zimtaldehyd.

8. Futtermittelzusatz nach Anspruch 7, der außerdem Linalool enthält.

9. Futtermittelzusatz nach einem der vorhergehenden Ansprüche, wobei das Mittel zur kontrollierten Freisetzung ausgewählt ist aus hydrierten tierischen Ölen, hydrierten Pflanzenölen, Fettsäuren mit mindestens 14 Kohlenstoffatomen und pH-empfindlichen Polymeren.

10. Futtermittelzusatz für monogastrisches Tierfutter, umfassend mindestens zwei TRP-Modulatoren, die die Calciumaufnahme im Darm eines monogastrischen Tieres verbessern können, und ein Mittel zur kontrollierten Freisetzung, wobei das Mittel zur kontrollierten Freisetzung ausgewählt ist aus hydrierten Tierölen, hydrierten Pflanzenölen und Fettsäuren mindestens 14 Kohlenstoffatome und pH-empfindliche Polymere.

11. Futtermittelzusatz nach Anspruch 10, wobei das Mittel zur kontrollierten Freisetzung ein hydriertes tierisches Öl oder ein hydriertes Pflanzenöl ist.

12. Tierfutter, umfassend den Futterzusatzstoff nach einem der vorhergehenden Ansprüche.

13. Verwendung des Futtermittelzusatzes nach einem der Ansprüche 1 bis 11 zur Verbesserung des Immunsystems bei monogastrischen Tieren und/oder zur Prophylaxe von Mastitis metritis agalactia (MMA) bei Schweinen.

14. Verwendung des Futtermittelzusatzes nach einem der Ansprüche 1 bis 11 zur Erhöhung der Kationenaufnahme im Darm eines monogastrischen Tieres, insbesondere im Jejunum, Blinddarm und/oder Dickdarm eines monogastrischen Tieres.

**Revendications**

1. Additif alimentaire pour aliments pour animaux monogastriques comprenant au moins deux modulateurs TRP capables d'améliorer l'absorption de calcium dans l'intestin d'un animal monogastrique, et un agent de libération contrôlée, l'additif alimentaire comprenant du carvacrol et de la vanilline.

2. Additif alimentaire selon la revendication 1, comprenant en outre un troisième modulateur TRP capable d'améliorer l'absorption de calcium dans le côlon d'un animal monogastrique.

3. Additif alimentaire selon la revendication 2, dans lequel le troisième modulateur TRP est choisi dans un groupe constitué de bornéol, citral, linalol, thymol et cinnamaldéhyde.

4. Additif alimentaire selon l'une quelconque des revendications 2 et 3, dans lequel le troisième modulateur TRP est le citral, le linalol ou le cinnamaldéhyde.

5. Additif alimentaire selon l'une quelconque des revendications précédentes, comprenant en outre un quatrième modulateur TRP capable d'améliorer l'absorption de calcium dans le jéjunum d'un animal monogastrique.

6. Additif alimentaire selon la revendication 5, dans lequel le quatrième modulateur TRP est choisi dans un groupe constitué de linalol et de thymol.

7. Additif alimentaire selon l'une quelconque des revendications précédentes comprenant du carvacrol, de la vanilline et du cinnamaldéhyde.

8. Additif alimentaire selon la revendication 7 comprenant en outre du linalol.

9. Additif alimentaire selon l'une quelconque des revendications précédentes, dans lequel l'agent de libération contrôlée est choisi parmi les huiles animales hydrogénées, les huiles végétales hydrogénées, les acides gras ayant au moins 14 atomes de carbone et les polymères sensibles au pH.

10. Additif alimentaire pour l'alimentation des animaux monogastriques comprenant au moins deux modulateurs TRP capables d'améliorer l'absorption de calcium dans l'intestin d'un animal monogastrique, et un agent de libération contrôlée, dans lequel l'agent de libération contrôlée est choisi parmi les huiles animales hydrogénées, les huiles végétales hydrogénées, les acides gras ayant au moins 14 atomes de carbone et polymères sensibles au pH.

11. Additif alimentaire selon la revendication 10, dans lequel l'agent de libération contrôlée est une huile animale hydrogénée ou une huile végétale hydrogénée.

12. Aliment pour animaux comprenant l'additif alimentaire selon l'une quelconque des revendications précédentes.

13. Utilisation de l'additif alimentaire selon l'une quelconque des revendications 1 à 11 pour améliorer le système immunitaire chez les animaux monogastriques et/ou la prophylaxie de la mastite métrite agalactie (MMA) chez le porc.

14. Utilisation de l'additif alimentaire selon l'une quelconque des revendications 1 à 11 pour augmenter l'absorption de cations dans l'intestin d'un animal monogastrique, en particulier dans le jéjunum, le caecum et/ou le côlon d'un animal monogastrique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150164822 A
- WO 201737157 A
- WO 201586758 A
- WO 2016128530 A
- WO 2008155536 A
- WO 2015160843 A
- US 4808412 A
- US 4832967 A
- US 4876097 A